# EUROPEAN PATENT APPLICATION

(11) **EP 1 306 019 A1**
(43) Date of publication of application: **02.05.2003**
(21) Application number: 01954440.2
(22) Date of filing: 03.08.2001
(51) Int. Cl.: A23L 1/20, A23L 3/36

(54) **METHOD OF CONTINUOUSLY PRODUCING FROZEN FOODS**

(30) Priority: 04.08.2000 JP 2000236411; 27.12.2000 JP 2000398803
(71) Applicant: Fuji Oil Company, Ltd., Osaka-shi, Osaka 542-0086 (JP)
(72) Inventor: ADACHI, Tomohiko, c/o Fuji Oil Co Ltd, Kobe Factor, Kobe-shi, Hyogo 652-0875 (JP); NAKATANI, Shin, c/o Fuji Oil Co Ltd, Kobe Factory, Kobe-shi, Hyogo 652-0875 (JP); AKASAKA, Takeshi, c/o Fuji Oil Co Ltd, Kobe Fact, Kobe-shi, Hyogo 652-0875 (JP); SAKAMOTO, Makoto, c/o Fuji Oil Co Ltd, Hannan Fact, Izumisano-shi, Osaka 598-854 (JP); FUKUSHIMA, Satoru, c/o Fuji Oil Co Ltd, Hannan Fct, Izumisano-shi, Osaka 598-85 (JP)
(74) Representative: Baverstock, Michael George Douglas
(86) International application number: JP0106712
(87) International publication number: WO02013629

(57) **Abstract**

A method of efficiently producing foods being free from deformations such as net meshes that would occur when soft hydrous foods are frozen, and having a minimum of cracking to be produced by ice crystal forming. A method or producing soft hydrous foods, wherein soft hydrous foods, upon freezing, are carried to a smooth-flat-surface support, if necessary, by means of a conveyor fitted with crosspieces having upwardly curved surfaces at intervals relative to the conveying surface thereof; they are frozen on the support; and, after starting freezing, they are rolled or transferred onto a different support for further freezing.

## Description

### Technical Field

The present invention provides a method of efficiently producing foods such as tofu, etc., which are free from deformations such as net meshes that would occur when soft hydrous foods are individually frozen, and have a minimum of cracking by freezing.

### Background Art

Freezing soft hydrous foods such as tofu, etc., causes denaturation due to freezing to form so-called pores, and thus a variety of studies have been done for the improvement thereof (JP 6-217730 A, etc.). These studies primarily focused on the formulation in terms of preventing denaturation by freezing as much as possible and produced some effects. However, in case of, in particular, mass-production, these foods encounter other problems.

That is, soft hydrous foods such as tofu, etc., cake on a support during a freezing step, and attempts to take the food off cause the problems of requiring time, damaging tissues due to strain, etc. Furthermore, the problem of cracking is caused unless a special technique for thoroughly diffusing cooling air in a freezing apparatus is devised. This cracking is estimated to be a phenomenon in which, when the volume of a food increases during freezing, the contents of a portion with delayed freezing is extruded by the internal pressure, thereby partially breaking the tissues. In order to prevent such cracking, there is proposed a method of uniformly cooling the inside and outside of a food by conforming the temperature of the food to a temperature immediately prior to formation of ice crystals (JP 1-165333 A). However, this method is neither preferred as a continuous cooling method nor solves the problem of the caking of a food on a support if not cooled in a container, and therefore causes the problem of being difficult to individually freeze small foods such as tofu cut in small cubes cheaply.

### Disclosure of the Invention

The object of the present invention is to provide a method of producing soft hydrous foods being free from deformations such as net meshes without occurrence of cracks.

The present invention has been completed during a continuous study on freezing of a food without cracking, without conformance in a container and without formation of net meshes thereon.

That is, in order to solve the above problems in the prior art, the present inventors have found a method of producing a food which comprises subjecting a soft hydrous food to individual freezing on a smooth-flat-surface support; after starting freezing, rolling the food, or transferring the food onto a different support; and then further freezing the food. In the present invention, preferably, the rolling or transfer is carried out within the maximum ice crystal formation zone. Examples of the soft hydrous food include a processed tofu food such as tofu, fried tofu, ganmodoki (tofu burgers), etc. Examples of the smooth-flat-surface support include a flat steel belt, and examples of the different support include a ventilatable support. Preferably, the rolling or transfer is carried out at from the 1/5 time to the 4/5 time of the maximum ice crystal formation period

after starting freezing. Further, preferably, the soft hydrous food is carried to a smooth-flat-surface support by means of a conveyor fitted with crosspieces having upwardly curved surfaces at intervals relative to the conveying surface thereof. Furthermore, the present invention relates to a food obtained by these methods.

The present invention will be illustrated in detail hereinafter. The present invention provides a method of efficiently producing a food being free from deformations such as net meshes that would occur when the food is frozen, and having a minimum of cracking to be produced by ice crystal forming.

The method of producing a frozen food used in the present invention can be carried out by conventional means except the following points.

First, the terms used herein will be set forth.

"Cracking" refers to a state in which, when water freezes,. the volume increases and thus portions of the food with delayed freezing are internally pressurized, resulting in the extrusion of contents out of the surface.

"Deformations" of net meshes, etc. refer to the remaining of the shape of a support such as a net wire on the surface of a frozen food.

A basic operation for freezing a food is a cooling operation of removing heat from the food. Positive removal of heat from a food causes a rapid temperature drop of the food and, in the meantime, the temperature of the inside of the food reaches the freezing point, where water changes from a liquid phase to a solid phase. After freezing (ice formation) reaches the center of the food, a temperature drop of the food starts again, and then the temperature of the food comes to equilibrium with the environmental temperature. The time period of the progress of this freezing is referred to as the "maximum ice crystal formation period."

The process of manufacturing a soft hydrous food of the present invention will be illustrated hereinafter.

The soft hydrous food means a food having such softness that the food obtained by formulating raw materials, molding the resultant mixture and cooking the molded mixture is deformed along the shape of a contact surface due to its own weight in an unfrozen hydrous state. Typical examples include processed tofu foods such as tofu (bean curd), fried tofu, ganmodoki, etc., Japanese rice cake, and the like, and have a water content of about 70% or more, though it varies depending on, for example, the presence or absence of ingredients. It is also possible to individually freeze foods without containing in containers.

The "smooth-flat surface support" refers to a flat support that has a smooth surface and is not equipped with bore holes, etc., capable of ventilation from the back side This is in the form of an endless band for conventional transportation and, typically, a steel flat belt made of steel can be used.

The "rolling" or "transfer" means to overturn a food on the smooth-flat surface support or to shift a food to a different support.

The ventilatable support refers to a support through which cool wind can pass, and typically means a net belt knitted in the form of a net using steel, etc.

When freezing is carried out by using a belt only, the following disadvantages are caused. When a soft hydrous food is frozen only by using a steel flat belt, the food is likely to have cracks and strongly adheres to the belt. Removal of the food requires strong impact and, for solving this problem, the surface should be dissolved. In this case, when products are filled and packed as they are, the products tend to stick to each other. Next, when a soft hydrous food is frozen only by using a net belt, deformations such as marks of net meshes are caused.

The reason why cracking occurs seems to be expansion of water upon freezing, which results in concentration of pressure at portions where freezing is delayed, so that the layer of an unfrozen soft hydrous food is extruded. It is presumed that the occurrence of such cracking can be prevented by freezing the whole product uniformly. In case of freezing only by using a steel flat belt, a cooling medium such as air can hardly pass through a steel belt surface, and thus uniform freezing cannot be expected, thereby being apt to cause cracking.

In addition, when a soft hydrous food is frozen only by a net belt, the hydrous food cuts into the net prior to freezing to cause deformations of net meshes on the product In the freezing step of a soft hydrous food, when the passage time of the maximum ice crystal formation period after starting freezing is shorter than the 1/5 time of the maximum ice crystal formation period, the surface layer is still soft, and thus hardly prevents deformations of net meshes, etc., on the net belt after transfer. On the other hand, the time being longer than the 4/5 time of the maximum ice crystal formation period results in insufficient prevention of cracking. The rolling or transfer of the 1/3 to 2/3 time of the maximum ice crystal formation period is more preferred.

Furthermore, in the freezing step, when the duration of the maximum ice crystal formation period is shorter than 1 minute, the freezing is too rapid, thereby being apt to cause cracking. Preferably, the duration of the maximum ice crystal formation period is 2 minutes or more, though it depends on the size of a product.

In addition, if the deformation is caused upon carrying a soft hydrous food to the freezing step, the present invention makes no sense and the desired product cannot be obtained. As a method of carrying the food, preferably, there is a conveyor fitted with crosspieces having upwardly curved surfaces at . intervals relative to the conveying surface thereof. "Crosspieces" correspond to slats sequentially attached between two lines of roller chains of a so-called slat conveyor and its shape is a "one with an upwardly curved surface relative to the conveying surface." The shape coupled with the installation of the crosspieces at intervals prevents falling of soft hydrous foods because of their presence in the valleys of the upwardly curved surfaces even though the height difference prior to and subsequent to transfer is present, and therefore the foods are satisfactorily transported without breakage.

The soft hydrous foods frozen in this way may directly be used as frozen foods, or they may be further processed as freeze-dried foods.

### Best Mode for Carrying Out the Invention

The effectiveness of the present invention will be illustrated by means of the following Examples, but the technical idea of the present invention is by no means limited to the Examples.

### Example 1

To 5 kg of whole soybeans was added 15 kg of water at 10°C and the beans were soaked for 14 hours. These were separated into soaked whey and soaked soybeans using a sieve of 10 mesh. These soaked soybeans were ground along with 25 kg of grinding water using a grinder (manufactured by Nagasawa Machinery Manufacturing) to obtain soy puree. This was separated into soybean milk (solid content 9% by weight) and "okara" (insoluble residues or soy pulp) by a separator (manufactured by Tofer Co., Ltd., hereinafter, the same). This soybean milk was subjected to heat treatment at 98°C for 5 minutes with an indirect heater (manufactured by Hoshitaka Co., Ltd., hereinafter, the same). The soybean milk thus obtained was concentrated under vacuum (100 torr) with a concentrator (manufactured by Hisaka Works, Ltd., hereinafter, the same) to adjust it to a solid content of 12.5% by weight.

Into a molding box (160 mm x 120 mm x 40 mm) was placed 100 parts (parts by weight, hereinafter the same) of the soybean milk adjusted to 70°C, 0.3 part of calcium sulfate, 2 parts of potato starch (manufactured by Sanwa Cornstarch Co., Ltd., hereinafter the same) and 0.1 part of transglutaminase preparation (manufactured by Ajinomoto Co., Ltd., hereinafter, the same), and the resultant blend was allowed to stand for about 10 minutes and then was heated at 90°C with a steamer for about 20 minutes to prepare tofu. This was cut into 15 mm cubes (weight 3.4 g each). This was frozen at a freezing temperature of -35°C at an air speed of 15 m/sec with a freezing machine (jet freezer manufactured by Fujitetsumo Co., Ltd.). The duration of the maximum ice crystal formation period was 2 minutes. At 1 minute after the start of the maximum ice crystal formation period (the ½ time of the maximum ice crystal formation period), the food was transferred to a net conveyor and frozen to -18°C.

### Example 2

According to the same manner as that in Example 1, a frozen product was prepared except that the tofu was cut into 40 mm cubes (weight 64 g each), the duration of the maximum ice crystal formation period was 15 minutes, and the food was transferred to the net conveyer at 6 minutes after the start of the maximum ice crystal formation period (the 2/5 time of the maximum ice-crystal formation period).

### Comparative Example 1

According to the same manner as that in Example 1, a frozen product was prepared except that the food was transferred to the net conveyor just prior to the start of the maximum ice crystal formation period.

### Comparative Example 2

According to the same manner as that in Example 1, a frozen product was prepared except that the food was transferred to the net conveyor at immediately after passing through the maximum ice crystal formation period.

### Comparative Example 3

According to the same manner as that in Example 1, a frozen product was prepared except that freezing was carried out at a freezing temperature of -45°C at an air speed of 25 m/sec, the duration of the maximum ice crystal formation period was very fast, i.e., 50 seconds, and the food was transferred to the net conveyer at 25 seconds after the start of the maximum ice crystal formation period (the ½ time of the maximum ice crystal formation period).

### Comparative Example 4

According to the same manner as that in Example 2, a frozen product was prepared except that the food was transferred to the net conveyer at 2 minutes after the start of the maximum ice crystal formation period '(the 1/7.5 time of the maximum ice crystal formation period).

### Comparative Example 5

According to the same manner as that in Example 2, a frozen product was prepared except that the food was transferred to the net conveyer at 12 minutes after the start of the maximum ice crystal formation period (the 6/7.5 time of the maximum ice crystal formation period.

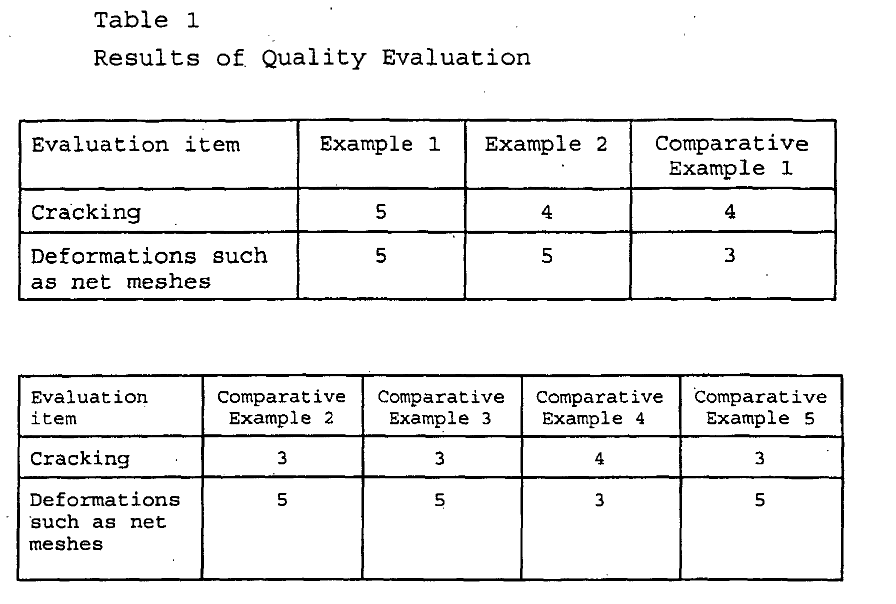

Evaluation was carried out by 5 panellists on a scale of 5. A point of 4 or more is regarded as good.

The tofu in Examples 1 and 2 has few cracks and is free from deformations such as net meshes, and thus is preferred. On the other hand, the tofu in Comparative Examples 1 to 5 shows either cracking or deformations such as net meshes, and thus is not preferred.

### Example 3

Onto a moving belt were supplied soybean milk and a coagulating agent and the resulting material was continuously coagulated under a heating atmosphere and then cut into 15 mm cubes. These were carried to a steel belt type freezer in a subsequent step with 2 m of difference in level and 10° of a carrying angle, by means of a conveyor fitted with cylindrical rods of 20 mm in diameter as crosspieces with the interval between the rods being 5 mm. The freezing was carried out at a freezing temperature of - 3.5°C at an air speed of 15 m/sec. The duration of the maximum ice crystal formation period was 2 minutes. At 1 minute after the start of the maximum ice crystal formation period (the % time of the maximum ice crystal formation period), the food was transferred to a net conveyor and frozen to -18°C.

As a result of the evaluations of the product, the product was good tofu that was free from cracking and free from deformations such as net meshes.

### Industrial Applicability

As illustrated hereinabove, according to the present invention, it is possible to continuously produce a soft hydrous food being free from deformations such as net meshes that would occur when a soft hydrous food is frozen, and having a minimum of cracking to be produced by ice crystal forming.

## Claims

1. A method of producing a food which comprises subjecting a soft hydrous food to freezing on a smooth-flat-surface support; after starting freezing, rolling the food, or transferring the food onto a different support; and then further freezing the food.

2. The method according to claim 1, wherein the rolling or transfer is carried out within the maximum ice crystal formation period.

3. The method according to claim 1, wherein the soft hydrous food is a processed tofu food such as tofu, fried tofu or ganmodoki (tofu burgers).

4. The method according to claim 1, wherein the smooth-flat-surface support is a flat steel belt.

5. The method according to claim 1, wherein the different support is a ventilatable support.

6. The method according to claim 1, wherein the rolling or transfer is carried out at from the 1/5 time to the 4/5 time of the maximum ice crystal formation period after starting freezing.

7. The method according to claim 1, wherein the soft hydrous food is carried to a smooth-flat-surface support by means of a conveyor fitting with crosspieces having upwardly curved surfaces at intervals relative to the conveying surface thereof.

8. A food obtained by the method according to any one of claims 1 to 7.
